# EUROPEAN PATENT APPLICATION

(11) **EP 4 439 530 A1**
(43) Date of publication of application: **02.10.2024**
(21) Application number: 22918879.2
(22) Date of filing: 26.12.2022
(51) Int. Cl.: G09B 9/14, B25J 19/06, G09B 9/04

(54) **OSCILLATION DEVICE AND METHOD FOR CONTROLLING OSCILLATION DEVICE**

(30) Priority: 06.01.2022 JP 2022001245
(71) Applicant: Mitsubishi Heavy Industries Machinery Systems, Ltd., Kobe-shi, Hyogo 652-8585 (JP)
(72) Inventor: OKAMOTO, Takumi, Kobe-shi, Hyogo 652-8585 (JP); SUZUKI, Kanta, Kobe-shi, Hyogo 652-8585 (JP)
(74) Representative: Hoffmann Eitle
(86) International application number: PCT/JP2022/047977
(87) International publication number: WO 2023/132295

(57) **Abstract**

The present invention provides an oscillation device and a method for controlling oscillation devices, wherein are provided: a plurality of telescopic devices capable of extending and retracting and arranged between a first member and a second member that are arranged so as to be opposed; a guide device, disposed between the first member and the second member, for following the operation of the telescopic devices; and, a control unit for controlling the operation of the telescopic devices and the guide device. The telescopic devices each have a telescopic unit and a drive source for supplying power to the telescopic unit. The guide device has a guide unit and a brake device for stopping the operation of the guide unit. The control unit controls the brake device according to the operating state of the telescopic unit.

## Description

### Technical Field

The present disclosure relates to an oscillation device such as a Stewart platform applied to a driving simulator or a flight simulator, and a method for controlling the oscillation device.

### Background Art

A Stewart platform applied to a driving simulator or the like is configured by installing six actuators between a lower support plate and an upper support plate. The Stewart platform controls an angle of the upper support plate with respect to the lower support plate by operating the six actuators. As such a technique, for example, there is one described in the following patent literature.

### Citation List

### Patent Literature

[PTL 1] International Publication No. WO2017/202920

### Summary of Invention

### Technical Problem

In the Stewart platform, an upper support plate is supported by a lower support plate by six actuators. Therefore, for example, when an operation abnormality occurs in one actuator among six actuators, it becomes difficult to control the upper support plate to an appropriate angle. In the above-mentioned patent literature, the number of actuators is increased. However, in such a configuration, there is a problem in that an increase in the number of actuators causes the device to be increased in size or to be increased in cost.

The present disclosure has been made to solve the problems described above, and an object of the present disclosure is to provide an oscillation device and a method for controlling an oscillation device capable of suppressing an increase in size and an increase in cost and improving safety.

### Solution to Problem

According to the present disclosure, in order to achieve the above object, there is provided an oscillation device including a plurality of expansion and contraction devices disposed between a first member and a second member disposed to face each other and capable of expanding and contracting; a guide device disposed between the first member and the second member to follow an operation of the expansion and contraction device; and a control unit that controls the operation of the expansion and contraction device and an operation of the guide device, in which the expansion and contraction device includes an expansion and contraction portion and a driving source that supplies power to the expansion and contraction portion, the guide device includes a guide portion and a brake device that stops an operation of the guide portion, and the control unit controls the brake device according to an operation state of the expansion and contraction portion.

In addition, according to the present disclosure, there is provided a method for controlling an oscillation device including a plurality of expansion and contraction devices disposed between a first member and a second member disposed to face each other and capable of expanding and contracting, and a guide device disposed between the first member and the second member to follow an operation of the expansion and contraction device, in which the expansion and contraction device includes an expansion and contraction portion and a driving source that supplies power to the expansion and contraction portion, and the guide device includes a guide portion and a brake device that stops an operation of the guide portion, the method including operating the brake device when an operation abnormality of the expansion and contraction portion is detected.

### Advantageous Effects of Invention

According to an oscillation device and a control method of the oscillation device of the present disclosure, it is possible to suppress an increase in size and an increase in cost and to improve safety.

### Brief Description of Drawings

Fig. 1 is a perspective view showing an overall configuration of an oscillation device according to a first embodiment.
Fig. 2 is a schematic view showing an expansion and contraction device and a guide device in the oscillation device.
Fig. 3 is a schematic view showing a brake device in the guide device.
Fig. 4 is a schematic view showing a modification example of the brake device in the guide device.
Fig. 5 is a schematic view showing an expansion and contraction device and a guide device in an oscillation device of a second embodiment.

### Description of Embodiments

Hereinafter, a preferred embodiment of the present disclosure will be described in detail with reference to the drawings. The present disclosure is not limited to the embodiment. In addition, in a case where there are a plurality of embodiments, the present disclosure also includes configurations obtained by combining each embodiment. In addition, constituents in the embodiment include constituents that are easily perceivable by those skilled in the art, constituents that are substantially the same, and constituents within a so-called range of equivalents.

### [First Embodiment]

### <Oscillation Device>

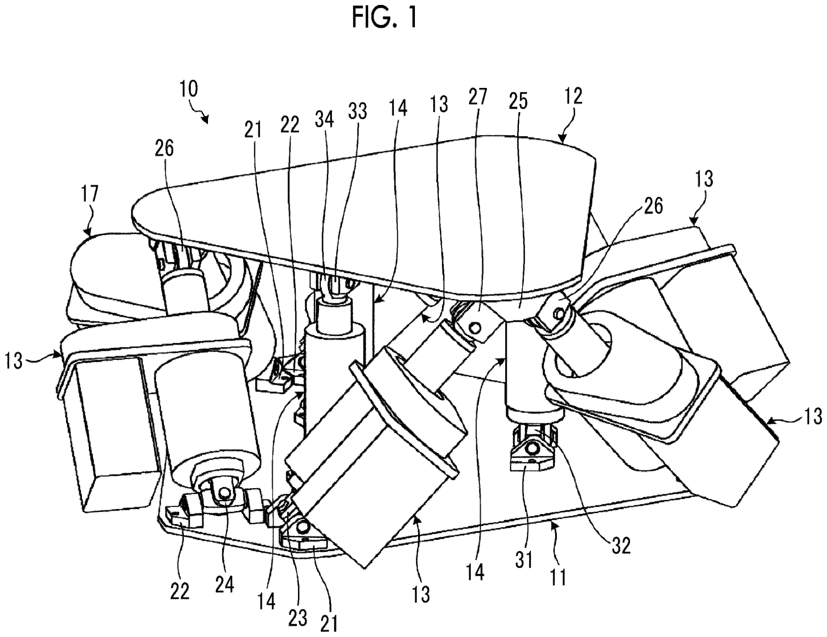

Fig. 1 is a perspective view showing an overall configuration of an oscillation device according to a first embodiment.

In the first embodiment, as shown in Fig. 1, the oscillation device 10 is configured to have a plurality of expansion and contraction devices 13 and a plurality of guide devices 14 disposed between the first member 11 and the second member 12 disposed to face each other. The oscillation device 10 is, for example, a Stewart platform, and has six expansion and contraction devices 13. However, the oscillation device 10 is not limited to the Stewart platform, and the number of the expansion and contraction devices 13 may be five or less or may be seven or more. The oscillation device 10 is applied to, for example, a simulator device such as a driving simulator or a flight simulator, a robot hand, or the like, but is not limited thereto.

In addition, the expansion and contraction device 13 is configured to include one set of two expansion and contraction units, and a plurality of sets (three sets in the present embodiment) of the expansion and contraction units are provided. One guide device 14 is provided for one set of two expansion and contraction units. That is, the oscillation device 10 of the present embodiment includes three sets of expansion and contraction units each including two expansion and contraction devices 13, and three guide devices 14 are provided for the three sets of expansion and contraction units. However, the number of guide devices 14 with respect to the expansion and contraction device 13 is not limited to these.

For example, six expansion and contraction devices 13 are configured into three sets, each set including two expansion and contraction devices 13 as one set. One set of two expansion and contraction device 13 is disposed in a chevron shape. In one set of the expansion and contraction devices 13, each of the base end portions is connected to the different connection portions 21 and 22 of the first member 11 via universal joints 23 and 24. In addition, in one set of the expansion and contraction devices 13, each of the tip portions is connected to the connection portion 25 common to the second members 12 via universal joints 26 and 27. In one set of the expansion and contraction devices 13, the base end portion is connected to the vicinity of the base end portion of the other adjacent one set of two expansion and contraction devices 13. The six expansion and contraction devices 13 have the same configuration. In addition, in one set of the expansion and contraction devices 13, each of the base end portions may be connected to a common connection portion, or each of the tip portions may be connected to different connection portions 25.

The three guide devices 14 are disposed to be substantially orthogonal to the first member 11 and the second member 12. In the guide device 14, each of the base end portions is connected to the connection portion 31 of the first member 11 via the universal joint 32. In addition, in the guide device 14, each of the tip portions is connected to the connection portion 33 of the second member 12 via the universal joint 34. The three guide devices 14 have the same configuration. In addition, the guide device 14 may serve as the connection portions 21, 22, and 25 of the expansion and contraction device 13.

The oscillation device 10 can change and adjust the angle of the second member 12 with respect to the first member 11 by controlling an amount of expansion and contraction of the plurality of expansion and contraction devices 13. At this time, the amount of expansion and contraction in one set of two expansion and contraction devices 13 is controlled in synchronization with each other. In addition, in the oscillation device 10, when the angle of the second member 12 with respect to the first member 11 is changed by controlling the amount of expansion and contraction of the plurality of expansion and contraction devices 13, the guide device 14 can support the second member 12 with respect to the first member 11 by operating to follow an operation of the expansion and contraction device 13. When the guide device 14 supports the second member 12 with respect to the first member 11, a slight resistance is generated. However, basically, the guide device 14 is capable of expanding and contracting so as not to apply a force between the first member 11 and the second member 12.

### <Configuration of Oscillation Device>

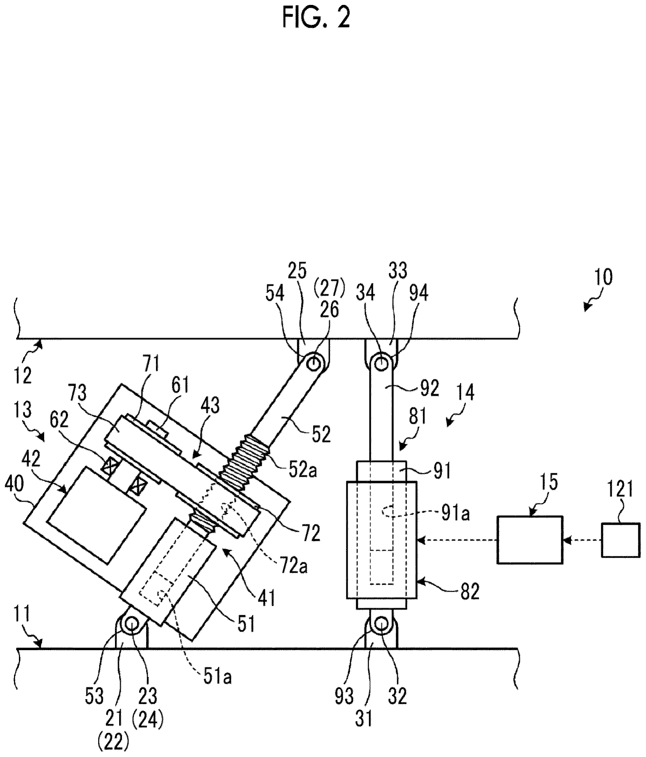

Fig. 2 is a schematic view showing an expansion and contraction device and a guide device in the oscillation device.

As shown in Fig. 2, the oscillation device 10 includes a control unit 15 in addition to the expansion and contraction device 13 and the guide device 14. The control unit 15 controls the operation of the expansion and contraction device 13 and the guide device 14.

### <Configuration of Expansion and Contraction Device>

The expansion and contraction device 13 includes an expansion and contraction portion 41, a driving source 42, and a power transmission system 43.

The expansion and contraction portion 41 is capable of expanding and contracting between the first member 11 and the second member 12. The driving source 42 supplies power to the expansion and contraction portion 41 via a power transmission system 43. The expansion and contraction portion 41, the driving source 42, and the power transmission system 43 are accommodated in the housing 40.

The expansion and contraction portion 41 includes an expansion and contraction main body portion 51 and an expansion and contraction rod portion 52. The expansion and contraction main body portion 51 is formed with a guide hole 51a penetrating the one end portion side. The expansion and contraction rod portion 52 is formed with the screw portion 52a in an intermediate portion in the axial direction. The expansion and contraction portion 41 is configured such that one end portion of the expansion and contraction rod portion 52 is fitted to the guide hole 51a of the expansion and contraction main body portion 51 so as to be movable along the axial direction.

The expansion and contraction main body portion 51 is fixed to the housing 40. In the expansion and contraction portion 41, a part of the other end portion side of the expansion and contraction main body portion 51 protrudes from the housing 40. The other end portion of the expansion and contraction main body portion 51 is provided with a connection portion 53, and the connection portion 53 is connected to the first member 11 via universal joints 23 and 24. In addition, in the expansion and contraction portion 41, a part of the other end portion side of the expansion and contraction rod portion 52 protrudes from the housing 40. The other end portion of the expansion and contraction rod portion 52 is provided with a connection portion 54, and the connection portion 54 is connected to the second member 12 via universal joints 26 and 27.

The driving source 42 is, for example, an electric or hydraulic motor. The driving source 42 has a rotary shaft 61 as an output shaft. The driving source 42 is accommodated in and fixed to the housing 40. The rotary shaft 61 is rotatably supported in the circumferential direction by the bearing 62 with respect to the housing 40. The driving source 42 can rotate the rotary shaft 61 in a normal direction and a reverse direction. The driving source 42 supplies power to the expansion and contraction portion 41.

The power transmission system 43 has a drive pulley 71, a driven pulley 72, and a drive belt 73. The drive pulley 71 is fixed to the rotary shaft 61 of the driving source 42, is rotatable in the second housing, and is supported such that the drive pulley 71 is immovable in the axial direction. The driven pulley 72 is screwed to the expansion and contraction rod portion 52 in the expansion and contraction portion 41. The driven pulley 72 has a cylindrical shape, and a screw hole 72a is formed in an inner peripheral portion thereof. The driven pulley 72 is rotatable in the second housing, is supported such that the driven pulley 72 is immovable in the axial direction, and has a screw hole 72a into which the screw portion 52a of the expansion and contraction rod portion 52 is screwed. The drive belt 73 is an endless belt and is wound between the drive pulley 71 and the driven pulley 72. The power transmission system 43 is capable of transmitting power of the driving source 42 to rotate the expansion and contraction rod portion 52 between the driving source 42 and the expansion and contraction rod portion 52.

Therefore, when the driving source 42 is driven and the rotary shaft 61 is rotated in the normal direction, the power is transmitted to the driven pulley 72 via the drive pulley 71 and the drive belt 73 constituting the power transmission system 43, and the driven pulley 72 is rotated in the normal direction. Then, the rotation in the normal direction of the driven pulley 72 is transmitted to the expansion and contraction rod portion 52 via the screw hole 72a and the screw portion 52a, and in the expansion and contraction portion 41, the expansion and contraction rod portion 52 moves to one side in the axial direction and is separated from the expansion and contraction main body portion 51.

On the other hand, when the driving source 42 is driven and the rotary shaft 61 is rotated in the reverse direction, power is transmitted to the driven pulley 72 via the drive pulley 71 and the drive belt 73 constituting the power transmission system 43, and the driven pulley 72 is rotated in the reverse direction. Then, the rotation in the reverse direction of the driven pulley 72 is transmitted to the expansion and contraction rod portion 52 via the screw hole 72a and the screw portion 52a, and in the expansion and contraction portion 41, the expansion and contraction rod portion 52 moves to the other side in the axial direction and approaches with respect to the expansion and contraction main body portion 51.

### <Configuration of Guide Device>

The guide device 14 includes a guide portion 81 and a brake device 82.

The guide portion 81 is capable of expanding and contracting between the first member 11 and the second member 12. The brake device 82 stops the operation of the guide portion 81. The guide portion 81 and the brake device 82 are accommodated in the housing 40.

The guide portion 81 includes a guide main body portion 91 and a guide rod portion 92. The guide main body portion 91 is formed with a guide hole 91a penetrating the one end portion side. The guide portion 81 is configured such that one end portion of the guide rod portion 92 is fitted to the guide hole 91a of the guide main body portion 91 so as to be movable along the axial direction.

The guide portion 81 is provided with a connection portion 93 at the other end portion of the guide main body portion 91, and the connection portion 93 is connected to the first member 11 via the universal joint 32. In addition, the guide portion 81 is provided with a connection portion 94 at the other end portion of the guide rod portion 92, and the connection portion 94 is connected to the second member 12 via the universal joint 34.

### <Brake Device>

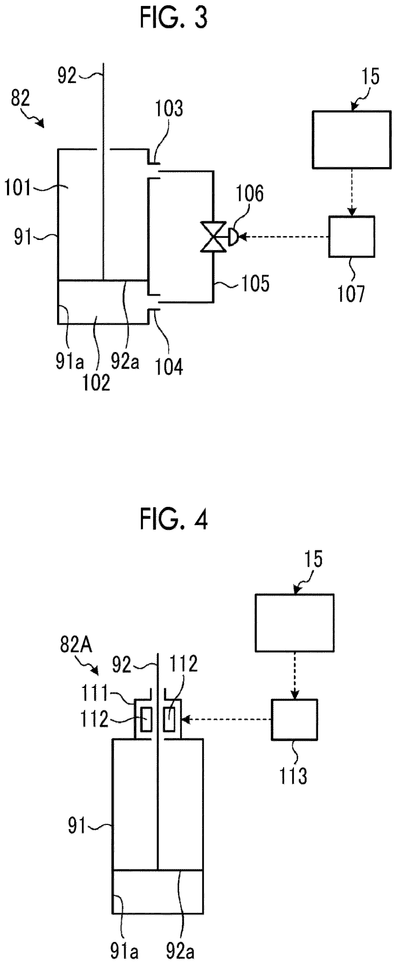

Fig. 3 is a schematic view showing a brake device in the guide device.

As shown in Figs. 2 and 3, the brake device 82 can stop the operation of the guide portion 81 in the guide device 14. The guide portion 81 includes a guide main body portion 91 and a guide rod portion 92. The operation stop of the guide portion 81 is to prevent the movement of the guide rod portion 92 with respect to the guide main body portion 91 and to restrain the relative movement between the guide main body portion 91 and the guide rod portion 92.

The guide main body portion 91 is a cylinder, and a guide hole 91a is formed in the guide main body portion 91. A piston 92a that is fitted to the guide hole 91a and is movable is connected to one end portion of the guide rod portion 92 in the axial direction. The guide main body portion 91 divides the guide hole 91a into two chambers 101 and 102 by the piston 92a, and the chambers 101 and 102 are filled with a fluid (for example, oil). The chambers 101 and 102 are provided with ports 103 and 104, and the ports 103 and 104 communicate with each other through a communication passage 105 outside. The communication passage 105 is provided with an opening-closing valve 106, and the opening-closing valve 106 is opened and closed by an opening-closing portion 107. The brake device 82 is configured to include the chambers 101 and 102, the ports 103 and 104, the communication passage 105, the opening-closing valve 106, and the opening-closing portion 107.

Therefore, when the opening-closing valve 106 is opened by the opening-closing portion 107, the chambers 101 and 102 of the guide main body portion 91 are brought into a state where the ports 103 and 104 can communicate with each other through the communication passage 105 by the opening-closing valve 106 in an open state. At this time, the guide portion 81 allows the fluid to flow between the chambers 101 and 102 through the communication passage 105, and the guide portion 81 allows the guide main body portion 91 and the guide rod portion 92 to be relatively moved. That is, the guide portion 81 can be operated by the brake device 82.

On the other hand, when the opening-closing valve 106 is closed by the opening-closing portion 107, the chambers 101 and 102 of the guide main body portion 91 are in a state where the ports 103 and 104 are not capable of communicating with each other through the communication passage 105 by the opening-closing valve 106 in a closed state. At this time, the guide portion 81 cannot allow the fluid to flow between the chambers 101 and 102 through the communication passage 105, and the guide portion 81 is unable to relative move with respect to the guide main body portion 91 and the guide rod portion 92. That is, the guide portion 81 is brought into an operation stop state by the brake device 82.

### <Modification Example of Brake Device>

The brake device 82 is not limited to the above-described configuration. Fig. 4 is a schematic view showing a modification example of the brake device in the guide device.

As shown in Figs. 2 and 4, the brake device 82A can stop the operation of the guide portion 81 in the guide device 14. The guide portion 81 includes a guide main body portion 91 and a guide rod portion 92. The guide main body portion 91 is a cylinder, and a guide hole 91a is formed in the guide main body portion 91. A piston 92a that is fitted to the guide hole 91a and is movable is connected to one end portion of the guide rod portion 92 in the axial direction. The guide main body portion 91 is provided with a clamp portion 111 that restrains the movement of the guide rod portion 92. The clamp portion 111 has a pair of clamp pieces 112 and an operation portion 113 that brings the pair of clamp pieces 112 close to and away from each other.

Therefore, the operation portion 113 separates the pair of clamp pieces 112 in the clamp portion 111 from each other. At this time, the pair of clamp pieces 112 do not sandwich the guide rod portion 92, and the guide portion 81 allows the guide main body portion 91 and the guide rod portion 92 to relatively move. That is, the guide portion 81 can be operated by the brake device 82A.

On the other hand, the pair of clamp pieces 112 in the clamp portion 111 are brought close to each other by the operation portion 113. At this time, the pair of clamp pieces 112 sandwich the guide rod portion 92, and the guide portion 81 is unable to relatively move with respect to the guide main body portion 91 and the guide rod portion 92. That is, the guide portion 81 is brought into an operation stop state by the brake device 82A.

### <Configuration of Control Unit>

As shown in Fig. 2, the control unit 15 can control each expansion and contraction device 13 via the driving source 42. That is, the control unit 15 controls the expansion and contraction direction and the amount of expansion and contraction of each expansion and contraction device 13 by adjusting the rotation direction, the rotation speed, the rotation amount, and the like of the driving source 42. The control unit 15 controls the driving source 42 according to the input command value or the various stored programs. The control unit 15 is a controller, is configured to include, for example, a central processing unit (CPU), a micro processing unit (MPU), or the like, and executes various programs.

In addition, the control unit 15 can control each guide device 14 via the brake devices 82 and 82A according to the operation state of the expansion and contraction device 13. The expansion and contraction device 13 is provided with an operation abnormality detection unit 121 that detects an operation abnormality of the expansion and contraction portion 41, the driving source 42, the power transmission system 43 or the like. The operation abnormality detection unit 121 detects a failure of the expansion and contraction portion 41, the driving source 42, the power transmission system 43 or the like. The operation abnormality detection unit 121 is, for example, a rotation sensor that detects the rotation amount of the drive pulley 71 or the driven pulley 72, an acceleration sensor that detects the moving speed of the drive belt 73, a stroke sensor that detects the moving amount of the expansion and contraction rod portion 52, a torque sensor that detects an output torque of the driving source 42, a displacement sensor that detects the angle between the first member 11 and the second member 12, or the like, but is not limited to these sensors. In addition, the operation abnormality detection unit 121 is configured to detect the operation abnormality of the expansion and contraction portion 41, the driving source 42, and the power transmission system 43 that configure the expansion and contraction device 13. However, the operation abnormality detection unit 121 may detect the operation abnormality such as the damage of the universal joints 23, 24, 26, and 27 and the connection portions 21, 22, and 25.

The control unit 15 controls the brake devices 82 and 82A based on the detection result of the operation abnormality detection unit 121. When the operation abnormality detection unit 121 detects the operation abnormality of the expansion and contraction device 13, the control unit 15 stops the guide device 14 from operating by operating the brake devices 82 and 82A.

### <Operation of Expansion and Contraction Device and Guide Device>

When the angle of the second member 12 with respect to the first member 11 is changed, the control unit 15 operates each of the expansion and contraction devices 13. The control unit 15 drives the driving source 42 to rotate the rotary shaft 61 in a normal direction. The power of the driving source 42 is transmitted to the expansion and contraction portion 41 via the power transmission system 43, and the driven pulley 72 rotates in the normal direction. When the driven pulley 72 rotates in the normal direction, a rotational force is transmitted to the expansion and contraction rod portion 52 as an axial movement force via the screw hole 72a and the screw portion 52a, and the expansion and contraction rod portion 52 is separated from the expansion and contraction main body portion 51. As a result, the expansion and contraction device 13 can change the angle of the second member 12 with respect to the first member 11 by causing the expansion and contraction rod portion 52 to extend outward in the axial direction with respect to the housing 40.

On the other hand, the control unit 15 drives the driving source 42 to rotate the rotary shaft 61 in the reverse direction. The power of the driving source 42 is transmitted to the expansion and contraction portion 41 via the power transmission system 43, and the driven pulley 72 rotates in the reverse direction. When the driven pulley 72 rotates in the reverse direction, a rotational force is transmitted to the expansion and contraction rod portion 52 as an axial movement force via the screw hole 72a and the screw portion 52a, and the expansion and contraction rod portion 52 approaches the expansion and contraction main body portion 51. As a result, the expansion and contraction device 13 can change the angle of the second member 12 with respect to the first member 11 by causing the expansion and contraction rod portion 52 to contract inward in the axial direction with respect to the housing 40.

### <Operation of Control Unit>

Then, for example, when the operation abnormality detection unit 121 of the expansion and contraction device 13 detects the operation abnormality of the expansion and contraction portion 41, the operation abnormality detection unit 121 outputs to the control unit 15 that the expansion and contraction portion 41 is in operation abnormality. The control unit 15 controls the brake devices 82 and 82A and stops the operation of the guide device 14 according to the operation abnormality of the expansion and contraction portion 41 detected by the operation abnormality detection unit 121. That is, by operating the brake devices 82 and 82A, the relative movement between the guide main body portion 91 and the guide rod portion 92 in the guide device 14 is restrained.

As a result, even when some of the plurality of expansion and contraction devices 13 fall into an operation abnormality, the operation of each guide device 14 is stopped by the brake devices 82 and 82A. Therefore, the relative angle of the second member 12 with respect to the first member 11 is maintained, and the falling of the oscillation device 10 is suppressed.

### [Second Embodiment]

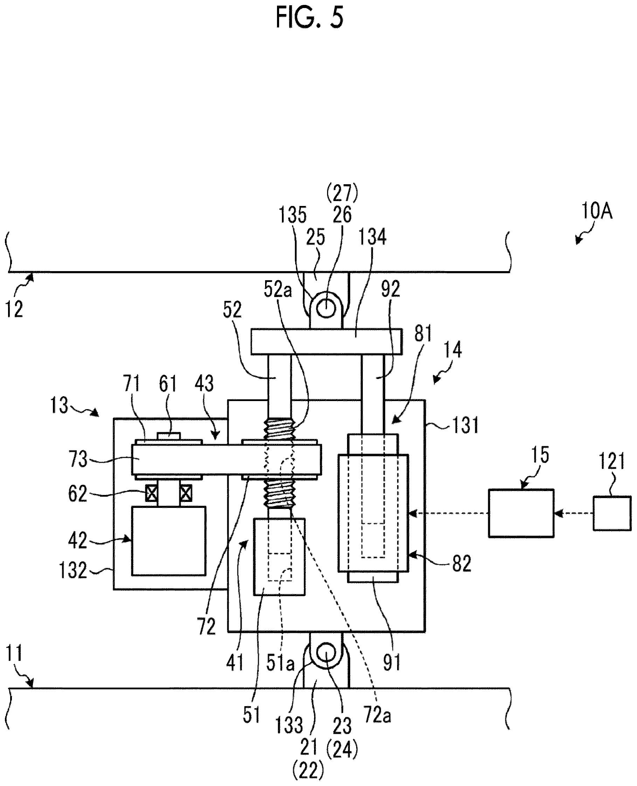

Fig. 5 is a schematic view showing an expansion and contraction device and a guide device in an oscillation device of a second embodiment. The same reference numerals are assigned to the members having the same functions as the members in the first embodiment described above, and the detailed description thereof will be omitted.

In the second embodiment, as shown in Fig. 5, the oscillation device 10A includes the expansion and contraction device 13, the guide device 14, and the control unit 15.

The expansion and contraction device 13 includes an expansion and contraction portion 41, a driving source 42, and a power transmission system 43. The basic configuration of the expansion and contraction portion 41, the driving source 42, and the power transmission system 43 is the same as that of the first embodiment.

The guide device 14 includes a guide portion 81 and a brake device 82. The basic configurations of the guide portion 81 and the brake device 82 are the same as those of the first embodiment.

The expansion and contraction portion 41, the guide portion 81, and the brake device 82 are fixed to the first housing 131. The driving source 42 is fixed to the second housing 132. The first housing 131 and the second housing 132 are integrally connected to each other. The first housing 131 and the second housing 132 may be integrally formed. The expansion and contraction portion 41 and the guide portion 81 are disposed in parallel with the first housing 131.

The expansion and contraction portion 41 has an expansion and contraction main body portion 51 and an expansion and contraction rod portion 52, and the expansion and contraction main body portion 51 is fixed to the first housing 131. The guide portion 81 has a guide main body portion 91 and a guide rod portion 92, and the guide main body portion 91 is fixed to the first housing 131. One end portion of the first housing (main body portion side connecting member) 131 is provided with a connection portion 133, and the connection portion 133 is connected to the first member 11 via the universal joints 23 and 24.

A part of the other end portion side of the expansion and contraction rod portion 52 of the expansion and contraction portion 41 protrudes from the first housing 131. A part of the other end portion side of the guide rod portion 92 of the guide portion 81 protrudes from the first housing 131. The other end portions of the expansion and contraction rod portion 52 and the guide rod portion 92 are connected to a connecting member (rod portion side connecting member) 134. The connecting member 134 is provided with a connection portion 135, and the connection portion 135 is connected to the second member 12 via the universal joints 26 and 27.

The control unit 15 can control each expansion and contraction device 13 via the driving source 42. That is, the control unit 15 controls the expansion and contraction direction and the amount of expansion and contraction of each expansion and contraction device 13 by adjusting the rotation direction, the rotation speed, the rotation amount, and the like of the driving source 42. In addition, the control unit 15 can control each guide device 14 via the brake devices 82 and 82A according to the operation state of the expansion and contraction device 13. The expansion and contraction device 13 is provided with an operation abnormality detection unit 121 that detects an operation abnormality of the expansion and contraction portion 41, the driving source 42, the power transmission system 43 or the like. The control unit 15 controls the brake devices 82 and 82A based on the detection result of the operation abnormality detection unit 121. When the operation abnormality detection unit 121 detects the operation abnormality of the expansion and contraction device 13, the control unit 15 stops the guide device 14 from operating by operating the brake devices 82 and 82A.

### [Effect and Action of Present Embodiment]

The oscillation device according to a first aspect includes a plurality of expansion and contraction devices 13 disposed between a first member 11 and a second member 12 disposed to face each other and capable of expanding and contracting; a guide device 14 disposed between the first member 11 and the second member 12 to follow an operation of the expansion and contraction device 13; and a control unit 15 that controls the operation of the expansion and contraction device 13 and an operation of the guide device 14, in which the expansion and contraction device 13 includes an expansion and contraction portion 41 and a driving source 42 that supplies power to the expansion and contraction portion 41, the guide device 14 includes a guide portion 81 and a brake device 82 that stops an operation of the guide portion 81, and the control unit 15 controls the brake device 82 according to an operation state of the expansion and contraction portion 41.

According to the oscillation device according to the first aspect, the expansion and contraction device 13 having the expansion and contraction portion 41 driven by the driving source 42 and the guide device 14 having the guide portion 81 following the expansion and contraction device 13 and the brake device 82 that stops the guide portion 81 are provided. Therefore, when an operation abnormality occurs in the expansion and contraction device 13, the brake device 82 stops the operation of the guide portion 81, so that the guide device 14 can maintain the posture of the second member 12 with respect to the first member 11 and the falling can be suppressed, and the safety can be improved. In addition, since the guide device 14 does not have a driving source, it is possible to suppress an increase in size and an increase in cost.

The oscillation device according to a second aspect is provided with an operation abnormality detection unit 121 that detects an operation abnormality of the expansion and contraction portion 41, and the control unit 15 operates the brake devices 82 and 82A when the operation abnormality detection unit 121 detects the operation abnormality of the expansion and contraction portion 41. Accordingly, the operation abnormality of the expansion and contraction portion 41 can be appropriately detected, and the brake devices 82 and 82A can be suitably operated.

In the oscillation device according to a third aspect, the expansion and contraction portion 41 is capable of changing an angle of the second member with respect to the first member by being supplied with the power from the driving source 42 and being driven to expand and contract. Accordingly, the guide portion 81 can appropriately support the second member 12 with a simple configuration.

In the oscillation device according to a fourth aspect, an expansion and contraction main body portion 51 and an expansion and contraction rod portion 52 that is movable in an axial direction with respect to the expansion and contraction main body portion 51 are provided as the expansion and contraction portion 41, a guide main body portion 91 and a guide rod portion 92 that is movable in an axial direction with respect to the guide main body portion 91 are provided as the guide device 14, and the driving source 42 is capable of moving the expansion and contraction rod portion 52 in an axial direction by supplying the power only to the expansion and contraction rod portion 52 via a power transmission system 43. Accordingly, the angle of the second member 12 with respect to the first member 11 can be changed by the operation of the expansion and contraction rod portion 52, and the second member 12 with respect to the first member 11 can be appropriately supported by the operation of the guide rod portion 92.

In the oscillation device according to a fifth aspect, an end portion of the expansion and contraction main body portion 51 and an end portion of the guide main body portion 91 are connected to one of the first member 11 and the second member 12, and an end portion of the expansion and contraction rod portion 52 and an end portion of the guide rod portion 92 are connected to the other of the first member 11 and the second member 12. Accordingly, the expansion and contraction device 13 and the guide device 14 can be individually handled, and the guide device 14 can be added to the oscillation device for only the expansion and contraction device 13 later.

In the oscillation device according to a sixth aspect, an end portion of the expansion and contraction main body portion 51 and an end portion of the guide main body portion 91 are connected to one of the first member 11 and the second member 12 via a first housing (main body portion side connecting member) 131, and an end portion of the expansion and contraction rod portion 52 and an end portion of the guide rod portion 92 are connected to the other of the first member 11 and the second member 12 via a connecting member (rod portion side connecting member) 134. Accordingly, the expansion and contraction device 13 and the guide device 14 can be integrated, and thus it is possible to improve the mounting property by making it possible to reduce the size.

The oscillation device according to a seventh aspect is configured such that a plurality of sets of the expansion and contraction units each including two expansion and contraction devices 13 as one set are provided, and one guide device 14 is provided for one set of the expansion and contraction units. Accordingly, it is possible to dispose an appropriate number of guide devices 14 at appropriate positions with respect to the plurality of expansion and contraction devices 13.

A control method for an oscillation device according to an eighth aspect includes a plurality of expansion and contraction devices 13 disposed between a first member 11 and a second member 12 disposed to face each other and capable of expanding and contracting, and a guide device 14 disposed between the first member 11 and the second member 12 to follow an operation of the expansion and contraction device 13, in which the expansion and contraction device 13 includes an expansion and contraction portion 41 and a driving source 42 that supplies power to the expansion and contraction portion 41, and the guide device 14 includes a guide portion 81 and a brake device 82 and 82A that stops an operation of the guide portion 81, the method includes operating the brake device 82 and 82A when an operation abnormality of the expansion and contraction portion 41 is detected.

According to the control method for the oscillation device according to the eighth aspect, when an operation abnormality occurs in the expansion and contraction device 13, the brake device 82 stops the operation of the guide portion 81, so that the guide device 14 can maintain the posture of the second member 12 with respect to the first member 11 and the falling can be suppressed, and the safety can be improved. In addition, since the guide device 14 does not have a driving source, it is possible to suppress an increase in size and an increase in cost.

In the above-described embodiment, the power transmission system 43 is configured by the pulley and the drive belt. However, the present disclosure is not limited to this configuration. The power transmission system 43 may be configured by, for example, a gear mechanism.

### Reference Signs List

10: Oscillation device
11: First member
12: Second member
13 Expansion and contraction device
14: Guide device
15: Control unit
41: Expansion and contraction portion
42: Driving source
43: Power transmission system
40: Housing
51: Expansion and contraction main body portion
52: Expansion and contraction rod portion
61: Rotary shaft
71: Drive pulley
72: Driven pulley
73: Drive belt
81: Guide portion
82, 82A: Brake device
91: Guide main body portion
92: Guide rod portion
121: Operation abnormality detection unit
131: First housing
132: Second housing
134: Connecting member (rod portion side connecting member)

## Claims

1. An oscillation device comprising:
a plurality of expansion and contraction devices disposed between a first member and a second member disposed to face each other and capable of expanding and contracting;
a guide device disposed between the first member and the second member to follow an operation of the expansion and contraction device; and
a control unit that controls the operation of the expansion and contraction device and an operation of the guide device,
wherein the expansion and contraction device includes an expansion and contraction portion and a driving source that supplies power to the expansion and contraction portion,
the guide device includes a guide portion and a brake device that stops an operation of the guide portion, and
the control unit controls the brake device according to an operation state of the expansion and contraction portion.

2. The oscillation device according to claim 1, further comprising:
an operation abnormality detection unit that detects an operation abnormality of the expansion and contraction portion,
wherein the control unit operates the brake device when the operation abnormality detection unit detects the operation abnormality of the expansion and contraction portion.

3. The oscillation device according to claim 1 or 2, wherein
the expansion and contraction portion is capable of changing an angle of the second member with respect to the first member by being supplied with the power from the driving source and being driven to expand and contract.

4. The oscillation device according to any one of claims 1 to 3, wherein
the expansion and contraction portion includes an expansion and contraction main body portion and an expansion and contraction rod portion that is movable in an axial direction with respect to the expansion and contraction main body portion, the guide portion has a guide main body portion and a guide rod portion that is movable in an axial direction with respect to the guide main body portion, and the driving source is capable of moving the expansion and contraction rod portion in an axial direction by supplying the power only to the expansion and contraction rod portion via a power transmission system.

5. The oscillation device according to claim 4, wherein
an end portion of the expansion and contraction main body portion and an end portion of the guide main body portion are connected to one of the first member and the second member, and an end portion of the expansion and contraction rod portion and an end portion of the guide rod portion are connected to the other of the first member and the second member.

6. The oscillation device according to claim 4, wherein
an end portion of the expansion and contraction main body portion and an end portion of the guide main body portion are connected to one of the first member and the second member via a main body portion side connecting member, and an end portion of the expansion and contraction rod portion and an end portion of the guide rod portion are connected to the other of the first member and the second member via a rod portion side connecting member.

7. The oscillation device according to any one of claims 1 to 6, wherein
the expansion and contraction device is provided with a plurality of sets of the expansion and contraction units, each including two expansion and contraction devices as one set, and one guide device is provided for one set of expansion and contraction units.

8. A method for controlling an oscillation device including
a plurality of expansion and contraction devices disposed between a first member and a second member disposed to face each other and capable of expanding and contracting, and
a guide device disposed between the first member and the second member to follow an operation of the expansion and contraction device,
in which the expansion and contraction device includes an expansion and contraction portion and a driving source that supplies power to the expansion and contraction portion, and
the guide device includes a guide portion and a brake device that stops an operation of the guide portion, the method comprising:
operating the brake device when an operation abnormality of the expansion and contraction portion is detected.
